# EUROPÄISCHE PATENTSCHRIFT

(11) **EP 2 535 614 B1**
(45) Veröffentlichungstag und Bekanntmachung des Hinweises auf die Patenterteilung: **09.11.2016**
(21) Anmeldenummer: 12172179.9
(22) Anmeldetag: 15.06.2012
(51) Int. Cl.: F16D 65/56, F16H 7/08

(54) **Scheibenbremse für ein Nutzfahrzeug**
Disc brake for a commercial vehicle
Frein à disque pour un véhicule utilitaire

(30) Priorität: 17.06.2011 DE 102011106631
(43) Veröffentlichungstag der Anmeldung: 19.12.2012
(73) Patentinhaber: KNORR-BREMSE Systeme für Nutzfahrzeuge GmbH, 80809 München (DE)
(72) Erfinder: Beck, Thomas, 94034 Passau (DE)
(74) Vertreter: Mattusch, Gundula

(56) Entgegenhaltungen:
- WO-A1-2013/050327
- WO-A1-2013/053637
- WO-A1-2013/053638
- DE-A1- 3 937 289
- JP-A- S6 319 459
- US-B2- 7 892 125

## Beschreibung

Die Erfindung betrifft eine Scheibenbremse nach dem Oberbegriff des Anspruchs 1.

Eine gattungsgemäße Scheibenbremse ist beispielsweise aus der DE 94 22 342 U1 bekannt. Bei dieser Scheibenbremse wirkt ein Drehhebel auf eine in einem Bremssattel positionierte Brücke ein, in der zwei Stellspindeln gelagert sind, die jeweils ein Druckstück zur Aufnahme eines aus einer Belagträgerplatte und einem daran befestigten Reibbelag bestehenden Bremsbelages aufweisen, der bei einer Bremsung an eine Bremsscheibe angedrückt wird. Die beiden Stellspindeln sind mit einem Außengewinde versehen und jeweils in eine Gewindebohrung der Brücke eingeschraubt.

Mithilfe einer Nachstelleinrichtung, die einer der Stellspindeln zugeordnet ist, wird durch Verdrehen der Stellspindeln in den Gewindebohrungen bei Verschleiß des Reibbelages der Bremsbelag so weit zugestellt, dass ein Lüftspiel zwischen dem Bremsbelag und der Bremsscheibe im Wesentlichen immer konstant bleibt. Hierzu wird ein konzentrisch in einer Stellspindel angeordneter Nachsteller, z.B. über ein Antriebselement vom Bremshebel angetrieben.

Da dieser Nachsteller jedoch lediglich in einer Stellspindel angeordnet ist, die Nachstellung des Bremsbelages jedoch gleichmäßig erfolgen soll und damit auch die zweite Stellspindel entsprechend zu verstellen ist, ist ein vorzugsweise formschlüssiger Zugmitteltrieb vorgesehen, der die Drehbewegung der einen Stellspindel auf die andere synchron überträgt. Als Zugmittel wird beispielsweise eine Gliederkette eingesetzt, die auf Kettenrädern der Stellspindeln umlaufend geführt ist. Ein als Zahnriemen ausgebildetes Zugmittel ist in der DE 40 32 886 A1 geoffenbart, wobei dieser Zahnriemen in entsprechend geformte Zahnräder der Stellspindeln eingreift.

Allerdings ist zu beklagen, dass sich das Zugmittel mit zunehmender Betriebsdauer reckt, woraus sich ein Übertragungsspiel ergibt, durch das die synchrone, d.h. gleichmäßige und gleichzeitige Verstellung beider Stellspindeln nicht mehr gegeben ist.

Dadurch kommt es nicht nur zu einem ungleichmäßigen Verschleiß des Reibbelages, sondern unter Umständen zu einer Einschränkung der Bremswirkung, da das genannte Lüftspiel, also der Abstand zwischen der Bremsscheibe und dem Reibbelag bei unbetätigter Bremse ungleichmäßig ist und der Reibbelag bei einer Bremsung nicht vollflächig an der Bremsscheibe anliegt.

Der DE 39 37 289 A1 ist eine Scheibenbremse zu entnehmen, bei der die Synchroneinrichtung, entgegen der Gattung im Bremssattel angeordnet ist. Zur Vorspannung von Zugmittelabschnitten sind Andruckrollen vorgesehen, die überdies verhindern sollen, dass das Zugmittel, ein Zahnriemen, auf den Zahnrädern überspringt.

Der Erfindung liegt die Aufgabe zugrunde, eine Scheibenbremse der gattungsgemäßen Art so weiterzuentwickeln, dass ihre Funktions- und Betriebssicherheit verbessert wird.

Diese Aufgabe wird durch eine Scheibenbremse mit den Merkmalen des Anspruchs 1 gelöst.

Durch den Einsatz einer erfindungsgemäß vorgesehenen Spanneinrichtung, mit der das Zugmittel der Synchroneinrichtung für die gleichmäßige Verstellung der Stellspindeln gespannt wird, und zwar derart, dass diese Spannung dauerhaft vorliegt, wird zuverlässig erreicht, dass ein betriebsbedingtes Längen des Zugmittels stets ausgeglichen wird.

Nach einer vorteilhaften Weiterbildung der Erfindung erfolgt dieser Längenausgleich, d.h. das Spannen des Zugmittels permanent, wozu die Spanneinrichtung im Sinne eines Kraftspeichers fungiert, dessen Kraft dauernd auf das Zugmittel gebracht wird.

Dabei kann die Spanneinrichtung aus einem federnden, beispielsweise elastischen Material bestehen, mit dem die beiden Trume des Zugmittels, die die genannten, mit den Stellspindeln fest verbundenen Zahnräder umschlingen, gegeneinander gezogen werden, unter Ausgleich der belastungsbedingten Längenänderung.

Die Spanneinrichtung, namentlich das elastische oder federnde Spannelement, ist dabei so ausgelegt, dass mit Sicherheit eine maximal mögliche Längenänderung des Zugmittels ausgeglichen wird.

In jedem Fall wird durch die Erfindung erreicht, dass eine absolut synchrone Verstellung der Stellspindel für einen Lüftspielausgleich gewährleistet ist. Die Nachteile, die sich aus dem erwähnten Stand der Technik ergeben, treten bei der neuen Scheibenbremse nicht mehr auf, so dass nicht nur die Funktionssicherheit der Scheibenbremse verbessert wird, sondern auch deren Betriebssicherheit. Gerade bei einer sicherheitsrelevanten Einrichtung, wie sie eine Scheibenbremse darstellt, kommt diesem Umstand eine besondere Bedeutung zu.

Nach einem weiteren Gedanken der Erfindung ist vorgesehen, die Spanneinrichtung am Bremssattel oder einem damit verbundenen Bauteil gegenüber dem bewegbaren Zugmittel in Zugrichtung ortsfest zu halten.

Hierzu können beispielsweise in einem das außenseitig des Bremssattels positionierte Zugmittel überdeckenden Verschlussdeckel, der üblicherweise einen Potentiometer aufnimmt, mit Nuten vorgesehen sein, in denen die Spanneinrichtung bzw. das Spannelement formschlüssig einliegt.

Ohne wesentliche bauliche Veränderung der Scheibenbremse kann somit die Spanneinrichtung in die Scheibenbremse integriert werden, wodurch sich die Erfindung mit äußerst geringen Kosten realisieren lässt. Zumindest stehen diese Kosten in keinem nennenswerten Verhältnis zu dem funktionalen Nutzen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den schematischen Aufbau einer erfindungsgemäßen Scheibenbremse in einer teilweise geschnittenen Draufsicht
- Figur 2: einen Schnitt durch die Scheibenbremse entsprechend der Linie II-II in Figur 1.
- Figur 3: einen Schnitt gemäß der Linie III-III in Figur 2.

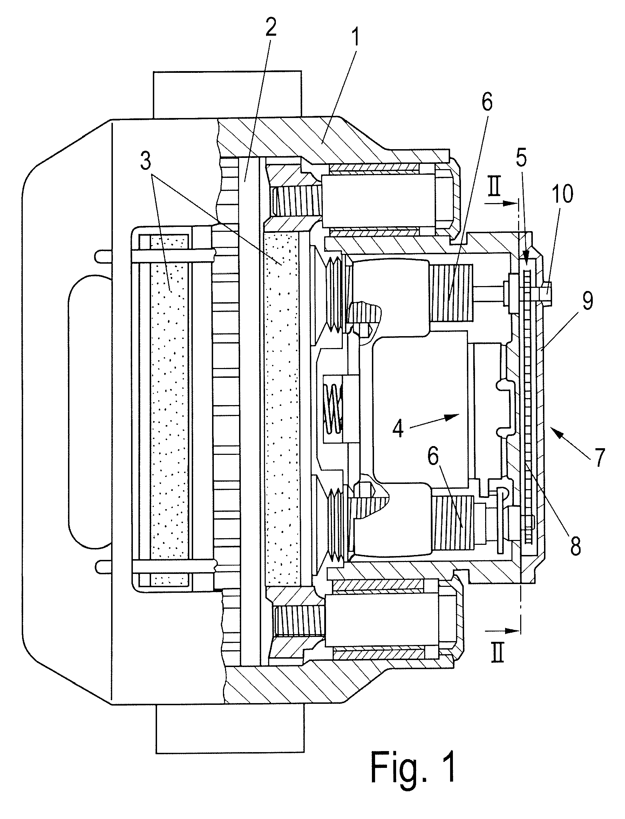

In der Figur 1 ist eine Scheibenbremse für ein Nutzfahrzeug dargestellt, mit einem eine Bremsscheibe 2 übergreifenden Bremssattel 1, beidseitig der Bremsscheibe 2 angeordneten und diese bei einer Bremsung kontaktierenden Bremsbelägen 3, und einer Zuspanneinrichtung 4, mit der der zuspannseitige Bremsbelag 3 gegen die Bremsscheibe 2 pressbar ist. Dabei wird der Anpressdruck von zwei Stellspindeln 6 von der Zuspanneinrichtung 4 auf den Bremsbelag 3 übertragen.

Weiter weist die Scheibenbremse eine Nachstelleinrichtung auf, mit der eine verschleißbedingte Änderung eines Lüftspiels zwischen dem Bremsbelag 3 und der Bremsscheibe 2 im Wesentlichen ausgleichbar ist.

Für eine synchrone Verstellung der Stellspindeln 6 ist eine Synchroneinrichtung 7 vorgesehen, mit einem Zugmitteltrieb 5 in Form eines Kettentriebes, bestehend aus zwei, jeweils an den Stellspindeln 3 verdrehsicher angeordneten Kettenrädern 11 sowie einer darauf geführten Kette 8.

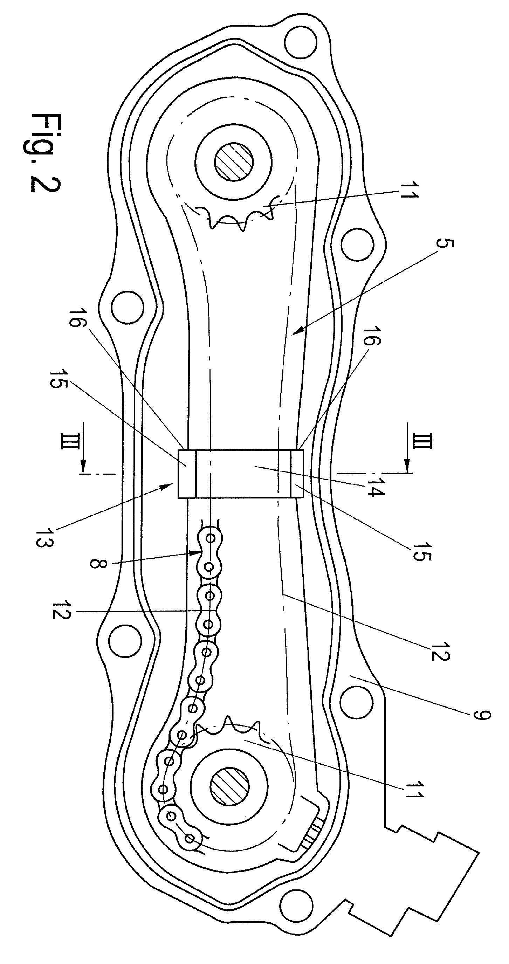

Die außerhalb des Bremssattels 1 positionierte Synchroneinrichtung 7, zu der auch eine Aufnahme 10 für eine Verschleißerkennung, beispielsweise für einen Potentiometer gehört, ist gegenüber der Umgebung durch einen Verschlussdeckel 9 abgedeckt, der in der Figur 2 als Einzelheit ebenso deutlich erkennbar ist wie der Zugmitteltrieb 5, der von dem Verschlussdeckel 9 überdeckt ist.

Gemäß der Erfindung greift am Zugmittel, also im Ausführungsbeispiel an der Kette 8, eine Spanneinrichtung 13 an, die aus einem elastischen Material, beispielsweise einem geeigneten Kunststoff oder aus Gummi besteht und im Sinne einer Schlaufe als Band um die Kette 8 geführt ist. Dabei stützen sich die beiden Trume 12 der Kette 8 an Stegen 15 der Spanneinrichtung 13 ab, die unter Vorspannung durch Laschen 14 miteinander verbunden sind, so dass die Kette 8 umschlungen ist.

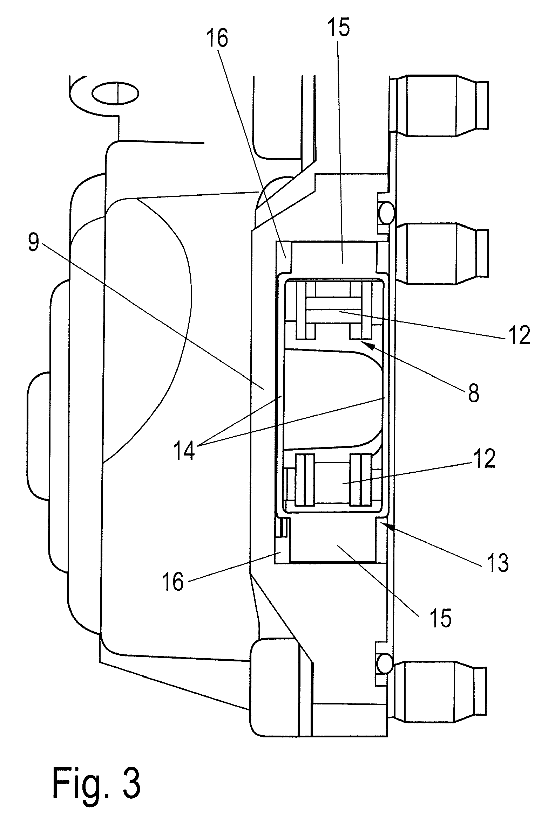

Um ein Verrutschen der Spanneinrichtung 13 durch die Bewegung der Trume 12 bei der Verstellung der Stellspindeln 6 zu vermeiden, ist die Spanneinrichtung 13 ortsfest gehalten, wozu in dem Verschlussdeckel 9 Nuten 16 (Figur 3) eingebracht sind, in denen die Spanneinrichtung 13 mit ihren Stegen 15 formschlüssig einliegt.

Neben einer ausreichenden, die Spannkraft aufbringenden Rückstellkraft, weist das Material der Spanneinrichtung 13 eine Verschleißfestigkeit auf, da die Trume 12 während ihrer Bewegung über die zugeordnete Anlagefläche der Stege 15 schleifen. Damit wird ein Abtrag des Materials der Stege 15 verhindert.

Selbstverständlich sind auch andere als die im Beispiel gezeigte Ausführung der Spanneinrichtung 13 denkbar. So kann anstelle der Lasche 14 eine Feder vorgesehen sein, die die Stege 15 miteinander verbindet.

### Bezugszeichenliste

- 1: Bremssattel
- 2: Bremsscheibe
- 3: Bremsbelag
- 4: Zuspanneinrichtung
- 5: Zugmitteltrieb
- 6: Stellspindel
- 7: Synchroneinrichtung
- 8: Kette
- 9: Verschlussdeckel
- 10: Aufnahme
- 11: Kettenrad
- 12: Trum
- 13: Spanneinrichtung
- 14: Lasche
- 15: Steg
- 16: Nut

## Patentansprüche

1. Scheibenbremse für ein Nutzfahrzeug mit
a) einem eine Bremsscheibe (2) übergreifenden Bremssattel (1),
b) einer im Bremssattel (1) angeordneten Zuspanneinrichtung (4) zum Andrücken von Bremsbelägen (3) an die Bremsscheibe (2),
c) zwei parallel und abständig zueinander angeordneten Stellspindeln (6), die mit der Zuspanneinrichtung (4) in Wirkverbindung stehen,
d) einer im Bremssattel (1) positionierten Nachstelleinrichtung, mit der über eine axiale Verstellung der Stellspindeln (6) eine verschleißbedingte Änderung eines Lüftspiels zwischen dem Bremsbelag (3) und der Bremsscheibe (2) im Wesentlichen ausgleichbar ist, sowie
e) einer außerhalb des Bremssattels positionierten Synchroneinrichtung (7) mit einem Zugmitteltrieb (5), mit dem die beiden Stellspindeln (6) synchron verstellbar sind, **dadurch gekennzeichnet, dass**
f) am Zugmittel des Zugmitteltriebs (5) eine ortsfest gehaltene Spanneinrichtung (13) angreift, die an einem den Zugmitteltrieb (5) außenseitig des Bremssattels (1) überdeckenden Verschlussdeckel (9) formschlüssig in Zugrichtung des Zugmittels gehalten ist.

2. Scheibenbremse nach Anspruch 1, **dadurch gekennzeichnet, dass** die Spanneinrichtung (13) unter Vorspannung an dem Zugmittel liegt.

3. Scheibenbremse nach Anspruch 1 oder 2, **dadurch gekennzeichnet, dass** die Spanneinrichtung (13) aus einem elastischen Material besteht.

4. Scheibenbremse nach einem der vorhergehenden Ansprüche, **dadurch gekennzeichnet, dass** die Spanneinrichtung (13) Trume (12) des Zugmittels umgreift, wobei sich die Trume (12) an der Spanneinrichtung (13) abstützen.

5. Scheibenbremse nach Anspruch 4, **dadurch gekennzeichnet, dass** die Spanneinrichtung (13) aus einem bandförmigen Material besteht, wobei zur Anlage der Trume (12) Stege (15) vorgesehen sind, die durch Laschen (14) miteinander verbunden sind.

6. Scheibenbremse nach Anspruch 5, **dadurch gekennzeichnet, dass** die Stege (13) formschlüssig in Nuten (16) des Verschlussdeckels (9) in Bewegungsrichtung der Trume (12) gesichert einliegen.

7. Scheibenbremse nach einem der Ansprüche 4 - 6, **dadurch**
**gekennzeichnet, dass** die Anlagebereiche der Spanneinrichtung (13) für die Trume (12) aus einem verschleißfesten Material bestehen.

8. Scheibenbremse nach einem der vorhergehenden Ansprüche, **dadurch gekennzeichnet, dass** die Vorspannung der Spanneinrichtung (13) so gewählt ist, dass das Zugmittel dauerhaft gespannt ist.

## Claims

1. Disc brake for a utility vehicle, comprising
(a) a brake calliper (1) overriding a brake disc (2)
(b) a brake application means (4) disposed in said brake calliper (1) for pressing brake linings (3) against said brake disc (2),
(c) two adjusting spindles (6) disposed in parallel to each other and spaced from each other, which are operatively connected to said brake application means (4),
(d) an adjusting means positioned in said brake calliper (1), provided for substantially compensating a wear-induced clearance between said brake lining (3) and said brake disc (2) by means of axial adjustment of said adjusting spindles (6), as well as
(e) a synchronizing means (7) positioned outside of said brake calliper and including a transmission mechanism with traction means (5), provided for synchronized adjustment of said two adjusting spindles (6),
**characterised in that**
(f) a traction means (13), which is held in stationary position, acts on the traction means of said transmission mechanism with traction means (5), which traction means is held on a closing plate (9) in a form-locking manner along the direction of traction of said traction means, with said closing plate covering said transmission mechanism with traction means (5) on the outside of said brake calliper (1).

2. Disc brake according to Claim 1, **characterised in that** said traction means (13) bears against said traction means (13) under a preload.

3. Disc brake according to Claim 1 or 2, **characterised in that** said traction means (13) consists of an elastic material.

4. Disc brake according to any of the preceding Claims, **characterised in that** said traction means (13) encompasses sections (12) of said traction means, with said sections (12) being supported on said traction means (13).

5. Disc brake according to Claim 4, **characterised in that** said traction means (13) consists of a band-shaped material, with webs (15) being provided for support of said sections (12), which webs are connected to each other by means of brackets (14).

6. Disc brake according to Claim 5, **characterised in that** said webs (13) are securely resting, in a form-locking manner, in grooves (16) of said closing plate (9) along the direction of movement of said sections (12).

7. Disc brake according to any of the Claims 4 to 6, **characterised in that** the bearing zones of said traction means (13) for said sections (12) consist of a wear-resistant material.

8. Disc brake according to any of the preceding Claims, **characterised in that** the preload on said traction means (13) is so selected that said traction means is under a permanent bias.

## Revendications

1. Frein à disque pour un véhicule utilitaire, comprenant
(a) un étrier de frein (1) chevauchant un disque de frein (2),
(b) un moyen de serrage du frein (4) disposé dans ledit étrier de frein (1) afin de presser des garnitures de frein (3) contre ledit disque de frein (2),
(c) deux broches de réglage (6) disposées l'une en parallèle à l'autre et à un écart l'une de l'autre, qui se trouvent en liaison opérationnelle avec ledit moyen de serrage du frein (4),
(d) un moyen de réajustage positionné dans ledit étrier de frein (1), qui sert à la compensation essentielle d'un jeu créé par l'usure entre ladite garniture de frein (3) et ledit disque de frein (2) par ajustement axial desdites broches de réglage (6), ainsi
(e) qu'un moyen de synchronisation (7) positionné en dehors dudit étrier de frein et comprenant un mécanisme de transmission à moyen de traction (5) pour l'ajustement synchronisé desdites deux broches de réglage (6),
**caractérisé en ce**
(f) **qu'**un moyen de traction (13), qui est retenu en une position stationnaire, agit sur ledit moyen de traction dudit mécanisme de transmission à moyen de traction (5), ce moyen de traction étant tenu sur un couvercle de fermeture (9) à ajustement de forme en sens de traction dudit moyen de traction, audit couvercle de fermeture fermant ledit mécanisme de transmission à moyen de traction (5) du côté extérieur dudit étrier de frein (1).

2. Frein à disque selon la revendication 1, **caractérisé en ce que** ledit moyen de traction (13) porte contre ledit moyen de traction (13) sous précontrainte.

3. Frein à disque selon la revendication 1 ou 2, **caractérisé en ce que** ledit moyen de traction (13) consiste en un matériau élastique.

4. Frein à disque selon une quelconque des revendications précédentes,
**caractérisé en ce que** ledit moyen de traction (13) enserre des tronçons (12) dudit moyen de traction, auxdits tronçons (12) s'appuyant sur ledit moyen de traction (13).

5. Frein à disque selon la revendication 4, **caractérisé en ce que** ledit moyen de traction (13) consiste en un matériau en forme de bande, aux traverses (15) étant formées pour l'appui desdits tronçons (12), lesquelles traverses sont reliées l'une à l'autre moyennant des éclisses (14).

6. Frein à disque selon la revendication 5, **caractérisé en ce que** lesdites traverses (13) sont noyées et sécurisées, à ajustement de forme, dans des rainures (16) dudit plaque de fermeture (9) le long de la direction de mouvement desdits tronçons (12).

7. Frein à disque selon une quelconque des revendications 4 à 6, **caractérisé en ce que** les zones d'appui dudit moyen de traction (13) pour lesdits tronçons (12) consistent en un matériau résistant à l'usure.

8. Frein à disque selon une quelconque des revendications précédentes,
**caractérisé en ce que** la précontrainte appliquée sur ledit moyen de traction (13) est choisie à un tel niveau que ledit moyen de traction se trouve sous une précontrainte permanente.
